# EUROPEAN PATENT APPLICATION

(11) **EP 2 747 040 A1**
(43) Date of publication of application: **25.06.2014**
(21) Application number: 12306660.7
(22) Date of filing: 21.12.2012
(51) Int. Cl.: G07C 9/00, A61B 5/00, B60R 25/20, H04B 5/00, H04B 13/00

(54) **Converting communication device**

(71) Applicant: Gemalto SA, 92190 Meudon (FR)
(72) Inventor: Riou, Mickaël, 92190 Meudon (FR); Peillon, Sylvain, 92190 Meudon (FR)
(74) Representative: Cour, Pierre

(57) **Abstract**

The invention relates to a converting communication device (1) comprising a first interface (11) for establishing an audio communication path of a first data flow with a first device (2), a second interface (12) for establishing a body-coupled communication path with a second device (3), and a first calculator (K1) for sending the first data flow to the first device after the body-coupled communication path has been established.

## Description

The invention relates to a converting communication device, acting as a proxy between two other devices such as an authentication device and a device needing authentication information, for example for the authentication and identification of individuals in an electronic transaction.

Contactless devices are widely used for authentication, especially in the field of electronic transactions. With the boom of the use of mobile devices for executing secure electronic transactions, individuals have a need for a unique contactless device comprising as much authentication information as possible. People also need to have a user-friendly device for which they do not have to remember quantity of password. Such authentication device can be for example described in the patent EP 1 695 296.

The applicant has thus developed contactless device connected to such authentication devices through a converting communication device, also named proxy and application have been filed under the filing number PCT/EP2012/070339. The converting communication device allows connecting contactless device with authentication devices. In addition, those authentication devices are not necessarily compliant with the common mobile devices, without modifying the structure of these mobile devices. However, the converting communication device has to be able to communicate with said authentication devices.

This converting communication device is especially directed to the growing market of mobile devices. One issue of this market is the lack of convergence between constructors regarding one standard and interoperable connector, the connector allowing data transmission whatever the mobile device used is. Unfortunately, many mobile devices, as iPhone, Android based phones, Blackberry, have evolved without much convergence. Unlike computer that has industry-standardized USB connection, until today there is no universal connector that can connect to a wide array of these devices with a peripheral, for instance a smart card reader. Even when this solution exists, it only has limited the interoperability of data transfers between different models of different mobile devices. One alternative is to use contactless communication instead of hardwired connector. One such possibility is using the Bluetooth technology which is present on every tablet and smartphone. However, one drawback of this solution is that all devices don't support the same range of profile. For instance, Android platform supports Bluetooth Serial Port Profile, but iPhone does not.

It is an object of the invention to provide a converting communication device compatible with as many mobile devices as possible in order to pair said mobile devices with contactless devices, especially used for authentication. The meaning of mobile device is to be understood as any device allowing people to access data and information from wherever they are. These terms include mobile phones and portable devices, such as handset, tablets, PDAs, laptop computers, mobile computers, mobile phone etc...

To this end, the invention provides a converting communication device comprising a first interface for establishing an audio communication path of a first data flow with a first device, a second interface for establishing a body-coupled communication path with a second device, and a first calculator for sending the first data flow to the first device after the body-coupled communication path has been established.

The establishment of the body-coupled communication (BCC) is the starting point for sending the first data flow to the first device through the audio communication path. An audio communication path is easy to establish with any kind of device, especially with any kind of mobile device. Moreover, notwithstanding the fact that it allows to connect two devices: one able to communicate through BCC and one through audio communication; one advantage of this converting communication device is that the calculator sends the second data flow only once the BCC has been established, meaning once the converting communication device and the first device has been paired: this allows saving energy and securing the communication between the first and the second device. The BCC is based on the principle that modulated electric field may carry a signal on a user body according to a capacitive coupling mode, thus the human body is used as a wire between the first device and the converting communication device. The terms intrabody communication (IBC) can also be used when referring to a body-coupled communication. A BCC presents the advantages of low energy consumption and of a mandatory connection between the user wearing the second device and the second device, thus providing a supplementary step of security.

According to not limited embodiments, the device can comprise one or more of the following additional characteristics:
- the first interface comprises a first audio connector. A majority of mobile devices has an audio connector. Indeed an audio connector is widely available since it is used for phone call, music, audio, memo taking etc. The converting communication device of the invention can thus advantageously be easily connected to any kind of audio connector such as jack audio, mini jack, jack video, microphone jack etc.;
- the body-coupled communication path allows the communication of a second data flow and the first calculator comprises a first converter for converting said second data flow into the first data flow, said first data flow being an audio signal. The first converter could be an analog/digital converter that allows converting a digital data flow into an analog signal and vice versa ;
- the converting communication device comprises a third interface for establishing a wireless communication of a third data flow with the second device after the body-coupled communication path has been established. Thus, the converting communication device and the first device can exchange information and data through a wireless communication, which presents the following advantages over a body-coupled communication: higher data rate, higher communication range, higher speed and it is already deployed. The wireless communication can be Wi-Fi, Bluetooth, RF, ZigBee protocols etc... ; and
- the first calculator comprises a second converter for converting said third data flow into the first data flow, said first data flow being an audio signal. The second converter could be an analog/digital converter that allows converting a digital data flow into an analog signal and vice versa. The first converter and the second converter may be the same converter.

The invention also provides a communication system comprising the converting communication device as previously defined, a first device comprising a second audio connector, and a second device comprising a body-coupled communication interface, said communication system being configured so that said second device is located, in use, in an area sufficiently close to a human body so that the human body is used as a conductor for the body coupled communication path.

This area is defined according to the type of antenna used in the body-coupled communication interface. Thus, the second device could be on a bracelet, a belt, an ankle, a garment, in a pocket etc... The converting communication device can be plugged through its first interface to the first device's audio connector.

According to not limited embodiments, the communication system can comprise one or more of the following additional characteristics:
- the second device comprises a wireless communication interface;
- the second device comprises an interface adapted for biometric authentication. The fourth interface is a biometric sensor such as, for example, a fingerprint sensor, a voiceprint sensor, etc... Thus, a user (human body) can use the second device only if he authenticates himself on the second device. An additional step of security is thus added to the communication system. Indeed, if the second device comprises all the authentication information for many electronic transactions of one user, it would put in jeopardy said one user if a second user could access to it without an authentication ; and
- the first device comprises a driver for storing the first data flow in a memory and a second calculator for comparing the first data flow stored in the memory with a set of predefined authentication data. The set of predefined authentication data may consist of, for example, access codes to an application for electronic payment, and the first data flow may be the authentication information sent by the converting communication device. In order to authenticate a user, the comparison between those two set of data is done.

The invention also provides an authentication method between a first device and a second device, wherein it comprises the steps of:
- establishing a body-coupled communication path, between the second device and a converting communication device, to exchange a secret information between said second device and said converting communication device ;
- establishing a secure communication session, using said secret information, between the second device and the converting communication device ;
- sending, through said secure communication session, an authentication information from the second device to the converting communication device ;
- sending, through an audio communication path, an information corresponding to said authentication information, from the converting communication device to the first device.

According to not limited embodiments, the method can comprise one or more of the following additional characteristics:
- the secure communication session is a wireless communication ; and
- the authentication method comprises a step of identifying a user by its biometric by the second device.

The invention also provides headphones comprising a converting communication device according to any one of the previous embodiments.

Some embodiments of apparatus and methods in accordance with embodiments of the present invention are now described, by way of example only, and with reference to the accompanying drawings, in which:
- figure 1 schematically illustrates one embodiment of a communication system of the invention, said communication system comprising a converting communication device, a first device and a second device ; and
- figure 2 schematically illustrates one embodiment of a communication method of the invention.

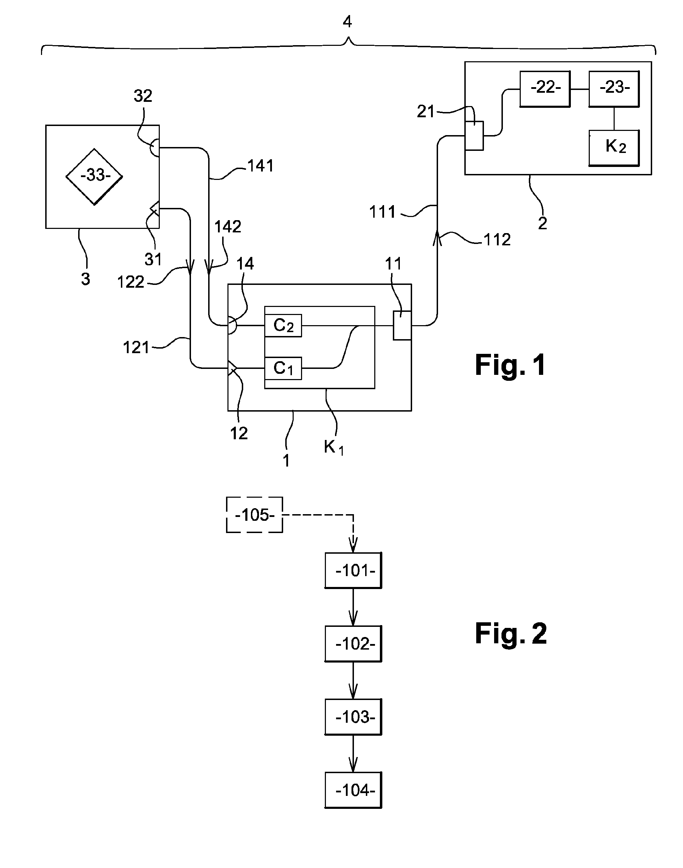

Referring now to the drawings, Figure 1 shows the basic parts of a communication system comprising a converting communication device 1, a first device 2 and a second device 3. The converting communication device 1 comprises a first interface 11 for establishing an audio communication path 111 with the first device 2. The first interface 11 can be a first audio connector such as a jack connector: mini jack; audio jack; video jack. The kind of first audio connector chosen depends on the type of the second audio connector 21 of the first device 2 to which the first interface 11 is to be connected. Through this audio communication path 111, a first data flow can be transmitted between the first device 2 and the converting communication device 1, the audio communication path is bi-directional. The first device 2 is a device with audio capabilities such as a smartphone or a tablet.

The converting communication device 1 also comprises a second interface 12 for establishing a body-coupled communication (BCC) path 121 with a second device 3. A body-coupled communication is based on the principle that a modulation of electric field can carry a signal on human skin using a technique called capacitive coupling, the human body behaving as a capacitor. Thus, in use, the second device 3 is to be in an area sufficiently close to a human body, so that the human body can be used as a conductor for the BCC. The signal to be carried on said human skin is the signal to be transmitted between the converting communication device 1 and the second device 3. Thus, by touching the converting communication device 1, a user allows the creation of a body-coupled communication path 121 between the converting communication device 1 and a second device 3, in the area close to the user's human body. The second device can be, for example, integrated into an anklet, a bracelet, a necklace, a garment, a belt etc...

The converting communication device 1 also comprises a first calculator K1 for sending a first data flow 112 through the audio communication path 111 from the converting communication device 1 to the first device 2 after the BCC path 121 has been established. The first calculator K1 waits for the BCC path 121 to be established to send the first data flow 112 to the first device 2. As explained above, a BCC path is established with the help of a human body acting as a conductor. Thus, the first calculator K1 waits for a user, bearing a second device 3, touching the second interface 12 of the converting communication device 1 to authorize the transmission of a first data flow 112 to the first device 2.

The first device 2 is, for example, a device for controlling the identity of an individual before performing an electronic transaction, for example a smartphone before purchasing something on the internet. The converting communication device 1 is connected to the smartphone through their audio connector. Said individual, bearing the second device 3, has to identify himself on a website. The second device 3 contains authentication data of said individual, for example her bankcard number for performing purchases on internet. By touching the converting communication device 1, a BCC communication path is established between the second device 3 and the converting communication device 1. A positive action of an individual initiates the communication. Authentication data of the second device 3 can either be:
- sent over the BCC communication path 121 from the second device 3 to the converting communication device 1; or
- sent over a wireless communication path 141 established between a third interface 14 of the converting communication device 1 and a wireless communication interface 32 of the second device 3.

In the first case, when authentication data is sent over the BCC communication path 121, authentication data are sent as a second data flow 122. This second data flow 122 has to be converted into the first data flow, as an audio signal, in order to be transmitted to the first device 2 through the audio communication path 111. To this end, the first calculator K1 comprises a first converter C1 for converting the second data flow 122 into the first data flow 112, to allow the transmission of the authentication data, over the audio communication path 111.

In the second case, when authentication data is sent over a wireless communication path 141 as a third data flow 142, it has to be converted in order to be transmitted to the first device 2 over the audio communication path. To this end, the first calculator K1 comprises a second converter C2 for converting this third data flow 142 into the first data flow 112 to allow the transmission of the authentication data over the audio communication path 111.

When the second device 3 sends a data flow (second data flow or third data flow) to the converting communication device, this data flow can be stocked in a memory (before or after its conversion) before being sent to the first device 2, as the first data flow 112.

The second device 3 could comprise an interface 33 adapted for biometric authentication. This interface includes a specific sensor such as a fingerprint sensor, a voiceprint sensor etc... Biometric authentication allows ascertaining that the individual bearing the second device 3 is an authorized user. Indeed, as the second device is intended for containing sensitive authentication information of an individual such as id-numbers (social security number), bank card number etc..., the biometric authentication disables an individual who had stolen the second device 3 of a user to use it.

The first device 2 is intended to check if the authentication data sent through the audio communication path 111 correspond to expected authentication data to access a secure e-payment application for example. To this end, the first device 2 comprises a driver 22 for managing the first data flow 112 and a memory 23 where the managed first data flow is stored once it has been received by the first device 2 and a second calculator K2 for comparing the first data flow 112 stored in the memory 23 with a set of predefined authentication data. The set of predefined authentication data could be, for example, stored in the memory 23.

The converting communication device may be included into headphones. Thus, an individual could easily plug its headphones into a first device (tablet, smartphone etc...) and access the authentication capabilities of the second device associated to the converting communication device.

Figure 2 illustrates the main steps of an authentication method between a first device and a second device. The second device is borne by an individual and contains authentication information of said individual for secure e-payment for example. The first device is a device intended to perform the e-payment, for example a smartphone or tablet.

The authentication method comprises a step of establishing 101 a body-coupled communication between the second device and a converting communication device. The establishment of the body-coupled communication can be realized by an action of touching the converting communication device, this action establishing a BCC path between the second device and the converting communication device, the human body acting as a conductor. The second device might be always awake, waiting for its bearer to touch a BCC compliant converting communication device, or the second device may comprise an ON/OFF button so that the bearer would awake its second device only when necessary. The step of establishing 101 a BCC between the second device and the converting communication device is to exchange secret information between those two devices. The second device, borne by an individual, when the BCC is established, sends the secret information to the converting communication device. The exchange of the secret information allows the opening of a secure channel for a step of establishing a secure communication session 102 between those two devices.

Once the secure communication session is established between the converting communication device and the second device, the method comprises a step of sending 103, through said secure communication session, authentication information from the second device to the converting communication device. The authentication information corresponds to the realization of the e-payment on the first device. The secure communication session could use the body-coupled communication path established before between the second device and the converting communication device or a wireless communication between those two devices.

Once the converting communication device has received said authentication information, it realizes a step of sending 104, through an audio communication path, information corresponding to this authentication information to the first device. The information corresponding to this authentication information could be:
- the authentication information converted into an audio communication path compliant data flow; or
- an information corresponding to said authentication information in a database.

The second device uses this information corresponding to the authentication information to verify the identity of the individual bearing the second device and its authorization to access to the e-payment application (in our example). The second device could use the bi-directional audio communication path 111 to send a set of information from the first device 2 to the converting communication device 1, for example for notifying the authorization once the first device authorize the second device, through the converting communication device, to access to the e-payment application.

The authentication method may comprise an optional step of identifying 105 a user by its biometric by the second device. This step should be realized before the establishment of a body-coupled communication between the second device and the converting communication device.

The authentication method has been described, as an example, with reference to the accomplishment of an e-payment on a smartphone or a tablet, but this example is not restrictive. The authentication method applies to any type of service access.

## Claims

1. A converting communication device (1) comprising :
- a first interface (11) for establishing an audio communication path (111) of a first data flow (112) with a first device (2) ;
- a second interface (12) for establishing a body-coupled communication path (121) with a second device ; and
- a first calculator (K1) for sending the first data flow (112) to the first device (2) after the body-coupled communication path (121) has been established.

2. The converting communication device (1) according to claim 1, wherein the first interface (11) comprises a first audio connector.

3. The converting communication device (1) according to claim 1, wherein the body-coupled communication path (121) allows the communication of a second data flow (122) and the first calculator (K1) comprises a first converter (C1) for converting said second data flow (122) into the first data flow (112), said first data flow (112) being an audio signal.

4. The converting communication device (1) according to claim 1, wherein it comprises a third interface (14) for establishing a wireless communication (141) of a third data flow (142) with the second device (3) after the body-coupled communication path (121) has been established.

5. The converting communication device (1) according to claim 4 wherein the first calculator (K1) comprises a second converter (C2) for converting said third data flow (142) into the first data flow (112), said first data (112) flow being an audio signal.

6. A communication system (4) comprising:
- the converting communication device (1) according to claim 1;
- a first device (2) comprising a second audio connector (21) ; and
- a second device (3) comprising a body-coupled communication interface (31);
said communication system (4) being configured so that said second device (3) is located, in use, in an area sufficiently close to a human body so that the human body is used as a conductor for the body-coupled communication path (121).

7. The communication system (4) according to claim 6 wherein the second device (3) comprises a wireless communication interface (32).

8. The communication system (4) according to claim 6 wherein the second device (3) comprises an interface (33) adapted for biometric authentication.

9. The communication system (4) according to claim 6 wherein the first device (2) comprises:
- a driver (22) for managing the first data flow (112),
- a memory (23) for storing the managed first data flow (112), and
- a second calculator (K2) for comparing the first data flow (112) stored in the memory (23) with a set of predefined authentication data.

10. An authentication method between a first device (2) and a second device (3), wherein it comprises the steps of:
- establishing (101) a body-coupled communication path (121), between the second device (3) and a converting communication device (1), to exchange a secret information between said second device (3) and said converting communication device (1) ;
- establishing (102) a secure communication session, using said secret information, between the second device and the converting communication device (1) ;
- sending (103), through said secure communication session, an authentication information from the second device to the converting communication device (1);
- sending (104), through an audio communication path (111), an information corresponding to said authentication information, from the converting communication device (1) to the first device (2).

11. The authentication method according to claim 10 wherein the secure communication session is a wireless communication.

12. The authentication method of claim 10 wherein it comprises a step of identifying (105) a user by its biometric by the second device.
